# EUROPEAN PATENT APPLICATION

(11) **EP 4 650 193 A2**
(43) Date of publication of application: **19.11.2025**
(21) Application number: 25206516.4
(22) Date of filing: 10.12.2021
(51) Int. Cl.: B60D 1/62

(54) **TOWING HOOK ARRANGEMENT**

(62) Divisional of application: 21213681.6
(71) Applicant: Brink Towing Systems B.V., 7951 CX Staphorst (NL)
(72) Inventor: EISING, Frederik Jacob, 9415 PW Hijken (NL); BOVENKAMP, Bas Kasper, 7951 CX Staphorst (NL)
(74) Representative: Valea AB

(57) **Abstract**

Towing hook arrangement with actuator and planetary gear immobilising device comprising first and second circular gears with different tooth counts.

## Description

### TECHNICAL FIELD

The present disclosure relates to a towing hook arrangement to be used for movable towing hooks. The towing hook arrangement is adapted to be mounted on a vehicle for towing or carrying an object. The towing hook has at least two positions, namely a towing position and a retracted position, in which retracted position the towing hook is located away from the towing position, wherein the towing hook arrangement is provided with an actuator for moving the towing hook between the towing position and the retracted position. The present disclosure also relates to a vehicle being provided with such a towing hook arrangement and to the use of such a towing hook arrangement.

### BACKGROUND

Towing hook arrangements comprising towing hooks for towing towable objects or for carrying carriable objects, such as e.g. trailers or bike racks, are commonly used today on vehicles. In most cases, a towing hook is mounted on the vehicle during the assembly process of the vehicle, although after sales mounting, e.g. by an authorized garage, is possible.

Towing hooks are known for their versatility in use, such as for towing trailers or for carrying bicycle racks. When not in use, the towing hook may not only be undesirable from an aesthetics perspective, but there is also a risk for staining passers-by if walking against it, and for damaging other vehicles. Possibly more importantly though, is the risk at a collision from behind of damaging not only the towing hook, but also the cross beam on the vehicle to which it is attached, and other adjacent features underneath the vehicle. For these and other reasons, modern towing hooks are often either retractable or detachable. Retractable towing hooks frequently have a towing position during which they are located centrically behind the vehicle at a desired distance from the rear bumper, and a retracted position in which they are stored away within the perimeter of the bumper or in any other desired position underneath the vehicle where it is protected from collisions or at least not visible for the passers-by. The towing hook may be driven either manually or automatically between the towing position and the retracted position, depending of the level of automation desired.

A vehicle and its accessories are exposed to external impacts, such as vibrations that may be of many different frequencies and amplitudes. Because of this, the linkage and other devices related to the towing hook are subjected to loads that over time for example are unscrewing screwed fasteners and loosening any joints or assembly points. One major problem has proven to be the storage and maintenance of the towing hook in its ultimate end positions, i.e. the towing position and the retracted position. The vibrations and other impacts on the towing hook and its accessories time and again lead to the towing hook losing its exact position in either end position and this could potentially lead to an unsafe situation, like the loss of the towed object.

One known manner of removing this effect of vibration-induced loosening is to provide a lock, commonly a radially actuated lock, or at least a locking pin moving in a direction perpendicular to the device to which it is aimed to lock in position. Such a locking mechanism adds to the weight, size and most importantly costs of the towing hook either by adding a motor for automatic locking and unlocking, or a gear for the same purpose for connecting the locking mechanism to the already present motor.

EP 1 225 067 A2 has an entirely different solution to the vibration-induced loosening problem. Instead of adding bulky locking devices to the towing hook it disclosed to use the motor already present for the movement of the towing hook between its end positions. The electrical motor is energized every three minutes, whether in its towing position or its retracted position, and driven in order to move the towing hook into its requested end position. This procedure is utilized at all times and enables a generally stable position for the towing hook.

An advantage is of course the simplicity of the design presented in EP 1 225 067 A2. However, there are several drawbacks connected with such an arrangement, one being the constant need to energize the electrical motor with early fatigue as a result. Since it is the same motor that drives the repositioning of the whole towing hook, early loss of the retractability function is foreseen. The motor may also get stuck and for this reason lose its capability both for the generic function of retractability, and for the position keeping function.

EP 2 857 233 A1 relates to a trailer coupling for motor vehicles, comprising a pivotable coupling hook, an electric motor drive and a planetary gear.

DE 103 60 245 A1 relates to a trailer coupling for motor vehicles, comprising a pivotable coupling hook, an electric motor drive and a worm gear.

DE 197 11 535 A1 relates to a trailer coupling for cars. The trailer coupling has a rod with a ball. The rod is designed to be adjusted as a movable part between two end positions. It may be adjusted between a rest position and a working position by a motor mounted on a rigid part of the car. A key-bolt has locking and unlocking positions and is designed to lock the moving part of the coupling to the fixed part in positive locking fashion in the end positions. The key-bolt is provided additionally to a positive locking in the end positions of the coupling.

DE 10 2015 204902 A1 relates to a ball pivot module for a trailer coupling having parts which can be moved by at least one electric drive, said electric drive taking into account a current gradient.

EP 1 544 003 A1 relates to a trailer coupling which can pivot on a bearing component. The trailer coupling comprises a first worm wheel fixed on the vehicle, a second worm wheel mounted in a housing, and a worm shaft extending tangentially to the two worm wheels. The worm shaft is coupled by means of a cage of a differential gear to a rotational drive. The cage has at least one planetary gear which meshes with a bevel wheel rotationally fixed on the worm shaft and with a bevel wheel loosely mounted on the worm shaft.

### SUMMARY

It is consequently an object of the present disclosure to provide an improved towing hook arrangement, or at least to provide a useful alternative.

Herein it is disclosed a towing hook arrangement, which is adapted to be mounted on a vehicle for towing or carrying an object. The towing hook arrangement comprises a retractable towing hook having at least two positions, namely a towing position and a retracted position, in which retracted position, the towing hook is located away from the towing position. The towing hook arrangement is provided with an actuator for moving the towing hook between the towing position and the retracted position. The towing hook arrangement is further provided with an immobilising device which is adapted to allow moving of the towing hook between the towing position and the retracted position, while being adapted to mitigate backlash in the towing hook arrangement and which is also adapted to secure the towing hook.

By "secure" is herein meant that the immobilising device may be adapted to lock the towing hook in either one of the towing position and in the retracted position, and/or hold the towing hook stable in any position, such as in the towing position or the retracted position or an intermediate position between the towing position and the retracted position, when the actuator is not powered.

This arrangement is consequently adapted to mitigate backlash, i.e. generally minimize any backlash or play, in order to be fully locked in either one of the towing position and the retracted position. When the towing hook has reached either the towing position or the retracted position it is thus located stable and steadfast in this position.

Backlash in a gear may generally be defined as play or a gap between mating teeth of two gears, which results in a relative positional change of the mating teeth, without meshing engagement, when the gear changes direction. For applications requiring stable positioning, backlash needs to be minimized.

The stability with which the towing hook arrangement according to the invention is acting is consequently higher than for common towing hook arrangements. A further advantage is the use of fewer parts than in common towing hook arrangements, which both reduces the risk for failure in a part, as well as reduces the weight of the total towing hook arrangement as such.

The actuator may be an electrical motor, a hydraulic motor for automatic actuation of the rotational movement or a pull cable for manual actuation of the rotational movement. The actuator may comprise a rotational actuator, such as an electrical motor, or a translatory actuator, such as e.g. a hydraulic cylinder, a pneumatic cylinder or a magnet.

The immobilising device may be purely mechanical, which has an advantage in that it is not depending on electronic equipment for its service and maintenance and any failure may be easier detectable for a layman. Also, a purely mechanical device is not dependent upon an energizing step in order to function properly.

The immobilising device is coupled between the actuator and the towing hook. This enables a compact design of the arrangement.

The immobilising device allows rotation around a rotational axis of an output shaft when acted upon by the actuator and locks rotation of the output shaft when acted upon by the towing hook. Any weight on the towing hook will hence not affect the position of the towing hook. By weight is here meant both payload from any device which is carried by the towing hook, and vibrations from driving of the vehicle with the arrangement coupled, either in the retracted position or in the towing position. The towing hook may however be movable between the two positions when acted upon by the actuator. There are therefore no movement restraints emanating from the immobilising device when acted upon by the actuator.

The immobilising device comprises a gear arrangement. A gear arrangement is a simple manner of achieving the immobilising functionality, while being compact in size and weight.

The gear arrangement may have a reduction ratio. Thereby, less torque may be needed for moving of the towing hook by the actuator. Also, it requires more torque to move the gear arrangement from the output end, i.e. from the towing hook.

The gear arrangement comprises a first gear and a second gear, the first gear being interconnected with the second gear, and the actuator is operatively coupled to the second gear and the towing hook may be operatively coupled to the first gear.

The first gear comprises gear teeth, and wherein the second gear comprises gear teeth, the number of gear teeth being different between the first gear and the second gear, such that the second gear in use assists driving of the first gear. The difference in number of gear teeth may be utilized to drive the rotation of the first gear. The difference in gear teeth also provides a relative radial movement between mating teeth and a natural bias which mitigates backlash.

The gear arrangement comprises a planetary gear arrangement, which is a compact kind of gear.

The first gear is a first circular gear. The second gear is a second circular gear positioned adjacent to the first circular gear along the rotational axis, and the gear arrangement may further comprise a set of planetary gears, arranged symmetrically around the rotational axis and which is positioned between the first circular gear and the second circular gear and in operative engagement with both the first circular gear and the second circular gear.

The set of planetary gears may be positioned concentrically within the first circular gear and the second circular gear.

The immobilising device may have an input shaft operatively coupled to the actuator. The input shaft may be operatively coupled to the second circular gear.

The gear arrangement further comprises a sun gear and the input shaft is be coupled to the sun gear which is positioned concentrically to and in engagement with the set of planetary gears.

The immobilising device may comprise an output shaft operatively coupled to the towing hook, the output shaft being coupled to the first gear.

The actuator may comprise an electric motor, which enables automated moving of the towing hook.

The arrangement may comprise a second actuator, a releasable locking device for releasably locking the towing hook in its retracted position and/or in its towing position, and a second immobilising device, the second actuator being adapted to operate the releasable locking device, and the second immobilising device being adapted to allow moving of the releasable locking device between a locked state and an unlocked state, while being adapted to inhibit backlash for securing the releasable locking device in the locked state. It may be desirable to have a releasable locking device in order to add additional safety to the arrangement.

By the addition of a second actuator and immobilising device and a releasable locking device, a safety check is provided in that the second actuator is only able to lock the towing hook in the locked state if the towing hook is in the correct position, e.g. in the towing position or in the retracted position. Further, the releasable locking device is able to take up loads which may be applied to the retractable towing hook by towable or carriable objects during use, thereby off-loading and protecting the actuators and immobilising devices from external forces which might otherwise act on the output shafts of the immobilising devices.

The locked state of the releasable locking device may be adapted to lock the towing hook in its towing position and/or in its retracted position.

The towing hook may be a non-movable, but detachable towing hook, i.e. having only an attached towing position or a detached/released state. The immobilising device does not move the towing hook but may be adapted to lock and/or unlock the towing hook in the towing position such that the towing hook may be detached when unlocked in the towing position. The immobilising device may further be adapted to inhibit backlash when the towing hook is locked in the towing position.

Herein it is also disclosed a vehicle provided with a towing hook arrangement as described herein.

Herein it is further disclosed a use of a towing hook arrangement as described herein in a vehicle.

### BRIEF DESCRIPTION OF THE DRAWINGS

The present invention will hereinafter be further explained by means of non-limiting examples with reference to the appended drawings wherein:
- Fig. 1: shows a vehicle with a towing hook arrangement according to the present disclosure
- Fig. 2a: shows a retractable towing hook in a towing position on a vehicle,
- Fig. 2b: shows a retractable towing hook in a retracted position on a vehicle,
- Fig 3a: shows an exploded perspective view of a first embodiment of the present disclosure
- Fig. 3b: shows a cross-sectional view of the first embodiment of the present disclosure
- Fig. 4a: shows a perspective view of two immobilising devices operatively coupled to a towing hook according to the present disclosure
- Fig. 4b: shows a cross-sectional view of an immobilising device operatively coupled to a towing hook according to the present disclosure
- Fig. 5a: shows a cross-sectional view of an immobilising device operatively coupled to a towing hook according to the present disclosure
- Fig. 5b: shows a perspective view of an immobilising device operatively coupled to a towing hook according to the present disclosure
It should be noted that the appended drawings are schematic and that individual components are not necessarily drawn to scale and that the dimensions of some features of the present invention may have been exaggerated for the sake of clarity.

### DETAILED DESCRIPTION OF EMBODIMENTS

The invention will, in the following, be exemplified by embodiments. It should however be realized that the embodiments are included in order to explain principles of the invention and not to limit the scope of the invention, as defined by the appended claims. A feature from one embodiment may be combined with one or more features of any other embodiment. An element of one embodiment may be indicated by the same reference number as an identical, or similar, element of another embodiment.

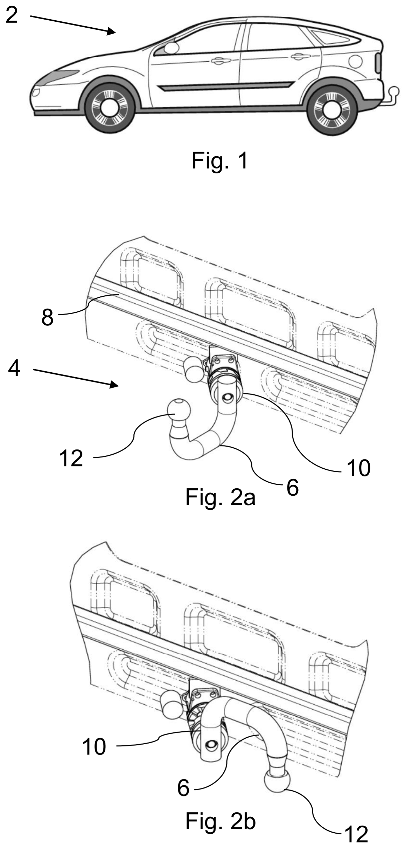

Figure 1 shows a vehicle 2 with a towing hook arrangement as described herein in a towing position.

Figure 2a and 2b show a towing hook arrangement 4 mounted on the vehicle in two different positions. The towing hook arrangement 4 comprises a towing hook 6 for being connected to an object to be towed or carried, a cross beam 8 adapted for being mounted to the vehicle and a retracting assembly 10 enabling the towing hook 6 to be displaced in relation to the cross beam 8 between a towing position, shown in figure 2a, and a retracted position, shown in figure 2b. The towing hook 6 can thus be displaced between a towing position, shown in figure 2a, and a retracted position, shown in figure 2b. In the towing position, a towable or carriable object may be attached to the towing hook 6, after which the vehicle can tow or carry the towable or carriable object. In the retracted position, the towing hook 6 may be positioned behind a rear bumper of the vehicle and is at least partly concealed from view by the rear bumper of the vehicle. The towing hook 6 is enabled to be displaced between the towing position and the retracted position by means of the retracting assembly 10. The towing hook 6 comprises a ball portion 12 adapted to be connected with the towable or carriable object. The size of the ball portion 12 can be selected to have different diameters but may in a preferred embodiment be two inches, i.e. 50.8 mm, or 50 mm in diameter.

The towable or carriable object may be any object which is specifically adapted to be mounted on a towing hook or an equivalent element. Such objects can generally be divided into two sub-categories. Firstly, pivotable towable objects such as a trailer, a caravan, a boat trailer, a cargo trailer, or similar. Pivotable towable objects rely on the towing hook to pull or push the pivotable towable object, while the pivotable towable object itself generally tends to have at least one ground supporting element such as wheels or skis or the like. The towing hook does not carry the full weight of a pivotable towable object. A pivotable towable object is further enabled to pivot about the towing hook and is thus relying on the mobility of the connection to the towing hook in order to be towed in a safe and convenient manner. Secondly, the towable or carriable object can be a carried accessory such as a bike carrier, a luggage carrier, a towing hook protection member or the like. Towing hook accessories are generally fixed to the towing hook and require that the towing hook, or the equivalent element, is carrying the full weight of the towing hook accessory. Although some load relief may sometimes be provided by the vehicle itself, a carried accessory does not have ground supporting elements such as wheels or skis or the like.

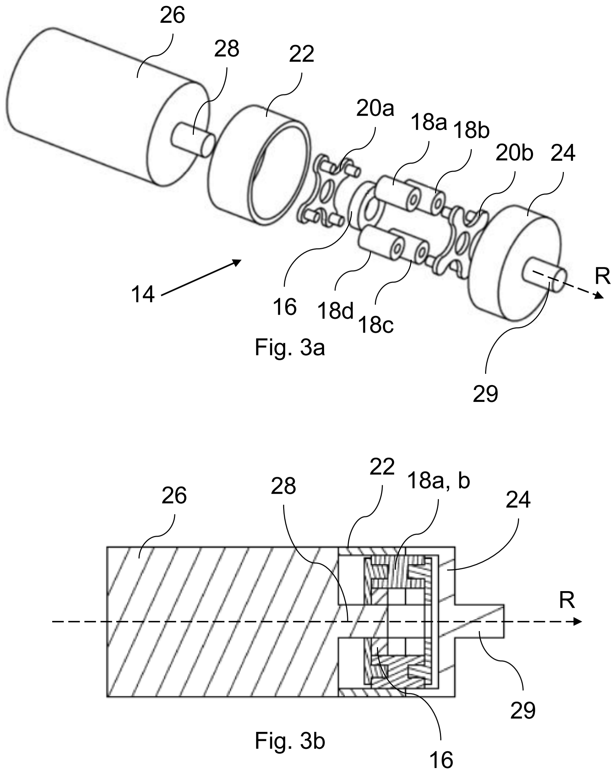

The towing hook arrangement 4 as described herein is provided with an actuator 26 for moving the towing hook 6 between the towing position and the retracted position. The towing hook arrangement 4 is further provided with an immobilising device which is adapted to allow moving of the towing hook between the towing position and the retracted position, while being adapted to inhibit backlash and which is also adapted to secure the towing hook 6. Figures 3a-3b show parts of towing hook arrangements 4 according to the invention.

The actuator 26 and the immobilising device may have an axis of longitudinal extension, and an axis of rotation, R. The immobilising device may be coupled between the actuator 26 and the towing hook 6, such as between the actuator 26 and the retracting assembly 10 of the towbar arrangement 4. The immobilising device may be freely rotational when acted upon by the actuator 26 and immobile when acted upon by the towing hook 6, as will be described in more detail hereinbelow.

In a first embodiment, as shown in Figures 3a-3b, the immobilising device comprises a gear arrangement 14, exemplified by a planetary gear arrangement 14. The gear arrangement 14 comprises a first gear 24 and a second gear 22, the first gear 24 being interconnected with the second gear 22, wherein the actuator 26 is operatively coupled to the second gear 22 and the towing hook 6 is operatively coupled to the first gear 24. The first gear 24 may be an output gear 24.

The first gear 24 is exemplified by a first circular gear 24. The second gear 22 is shown as a second circular gear 22, positioned adjacent to the first circular gear 24 along the rotational axis R. The first circular gear 24 may be a first ring gear 24 and the second circular gear 22 may be a second ring gear 22. The terms circular gear and ring gear may be used interchangeably herein. An output shaft 29 may be coupled to the first circular gear 24.

The gear arrangement 14 further comprises a set of planetary gears 18a-d which are arranged symmetrically around the rotational axis R. The planet gears are positioned between the first circular gear 24 and the second circular gear 22 and in operative engagement with both the first circular gear 24 and the second circular gear 22, i.e. such that teeth of the planet gears 18a-d mesh with teeth of both the first circular gear 24 and the second circular gear 22. The planet gears 18a-d are held by carriers 20a-b. The carriers 20a-b are rotatable around the rotational axis R. The first circular gear 24 and the second circular gear 22 are rotatable in relation to each other. By way of example, the second circular gear 22 may be rotatably fixed in relation to the actuator 26, and the first circular gear 24 may be rotatable in relation to the actuator 26.

The immobilising device comprises an input shaft 28 operatively coupled to the actuator 26. The input shaft 28 is further operatively coupled to the second circular gear 22. The towing hook arrangement further comprises a sun gear 16, wherein the input shaft 28 is coupled to the sun gear 16 which is positioned on the rotational axis R and in engagement with the set of planetary gears 18a-d. The planet gears 18a-d are in engagement with both the first circular gear 24 and the second circular gear 22.

The first circular gear 24 and the second circular gear 22 have gear teeth. The number of gear teeth is different between the first circular gear 24 and the second circular gear 22.

In operation, when energising the actuator 26, the actuator 26 rotates the input shaft 28, which acts upon the sun gear 16, which is operatively coupled to the planet gears 18a-d. The coupling of the planet gears 18a-d between the sun gear 16 and both the first circular gear 24 and the second circular gear 22 causes a rotation of the planet gears 18a-d around the rotational axis R. However, due to the difference in number of gear teeth between the first circular gear 24 and the second circular gear 22, the first circular gear 24 and the second circular gear 22 are forced to rotate in relation to each other. As exemplified above, if the second circular gear 22 is rotatably fixed in relation to the actuator 26, and the first circular gear 24 is rotatable in relation to the actuator 26, the first circular gear 24 is urged to rotate in relation to the actuator 26. Rotation of the first circular gear 24 causes a rotation of the output shaft 29. The output shaft 29 is operatively connected to the retracting assembly 10 such that operation of the actuator 26 causes movement of the towing hook 6 between the towing position and the retracted position.

An effect of the difference in number of gear teeth between the first circular gear 24 and the second circular gear 22 is a large reduction ratio between the input shaft 28 and the output shaft 29 of the immobilising device. Operation of the actuator 26 thus causes a very slow rotation of the output shaft 29 in relation to the input shaft 28.

A force acting on the ball portion 12 of the towing hook 6, such as from a carriable object or a towable object, when the actuator 26 is not in use, would impose a torque on the first circular gear 24, which would in turn impose a torque on the planet gears 18a-d. However, the planet gears 18a-d would be prevented from rotating due to the simultaneous engagement with the second circular gear 22, which is rotationally fixed in relation to the actuator 26. A load on the towing hook 6 therefore cannot rotate the first circular gear 24 or the planet gears 18a-d and will therefore not displace the towing hook 6. The immobilising device is thus freely rotational when acted upon by the actuator 26 and immobile when acted upon by the towing hook 6.

In addition, the difference in number of gear teeth causes a relative radial movement between the teeth and an engagement between the gear teeth with minimal backlash because a number of gear teeth of the planet gears 18a-d are always in abutment with gear teeth of the first circular gear 24 and second circular gear 22. There is thus provided a towing hook arrangement 4 having an immobilising device for allowing movement of the towing hook 6 between the towing position and the retracted position, which towing hook arrangement 4 does not require any further locking mechanism to fix the towing hook 6 in the towing position or the retracted position, and which towing hook arrangement 4 has minimal backlash.

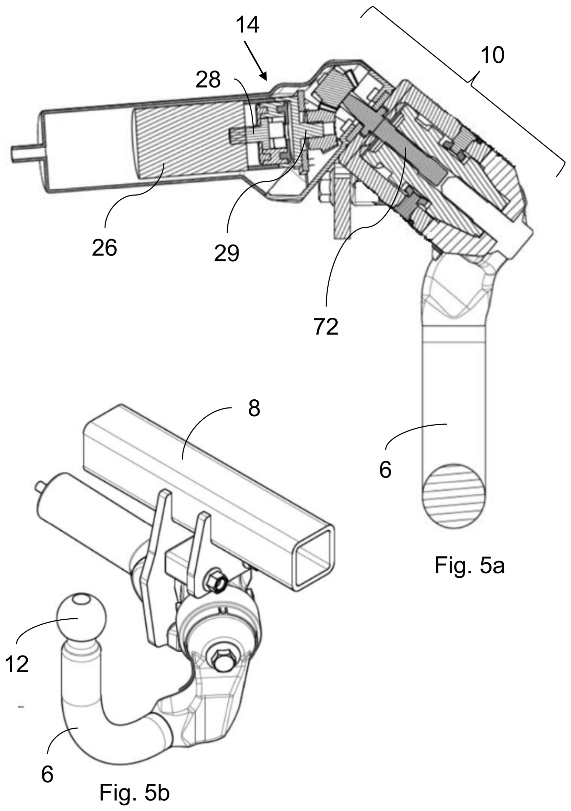

Figs 5a and 5b show a detailed example of the towing hook arrangement 4 comprising the immobilising device of the first embodiment. The illustrated immobilising device could equally be exchanged for the immobilising device of the second embodiment. The actuator 26 is operatively coupled to the retracting assembly 10 via the gear arrangement 14, such that rotation of the input shaft 28 causes a rotation of the output shaft 29. The output shaft 29 is in turn operatively coupled to a spindle 72 of the retracting assembly 10. Rotation of the spindle moves the towing hook 6 between the towing position and the retracted position. In the towing position and the retracted position the immobilising device is adapted to secure and lock the towing hook 6 and to inhibit backlash by means of the connection between the output shaft 29 and the retracting assembly 10.

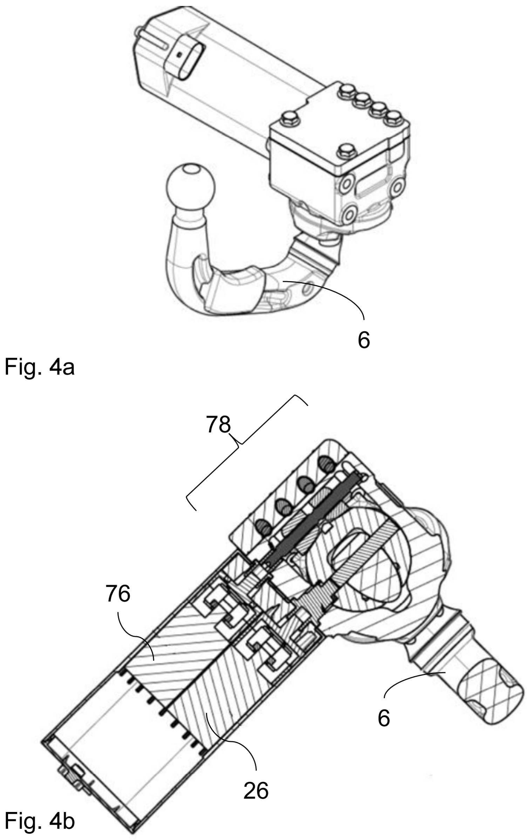

Figs 4a and 4b illustrate a towing hook arrangement 4 according to the description hereinabove, where the towing hook arrangement 4 further comprises a second actuator 76 and a releasable locking device 78 for releasably locking the towing hook 6 in its retracted position and/or in its towing position. The second actuator 76 is adapted to operate the releasable locking device 78, and the second immobilising device is adapted to allow moving of the releasable locking device 78 between a locked state and an unlocked state, while being adapted to inhibit backlash for securing the releasable locking device 78 in the locked state.

The first actuator 26 and the first immobilising device only actuate the movement and secure the towing hook arrangement in any intermediate position between the retracted position and the towing position. The second actuator 76 and the second immobilising device provide a safety check in that the second actuator 76 is only able to lock and secure the towing hook 6 via the releasable locking device 78 in the locked state if the towing hook 6 is in the correct position, i.e. in the end positions, the towing position or in the retracted position. Further, the releasable locking device 78 is able to take up loads which may be applied to the retractable towing hook 6 by towable or carriable objects during use, thereby off-loading and protecting the actuators 26, 76 and immobilising devices from external forces which might otherwise act on the output shafts of the immobilising devices.

Further modifications of the invention within the scope of the appended claims are feasible. As such, the present invention should not be considered as limited by the embodiments and figures described herein. Rather, the full scope of the invention should be determined by the appended claims, with reference to the description and drawings.
Below follows a numbered list of feasible embodiments of the disclosure.
1. A towing hook arrangement (4), which is adapted to be mounted on a vehicle (2) for towing or carrying an object, the towing hook arrangement (4) comprising
   - a retractable towing hook (6) movable between at least two positions when mounted on a vehicle (2), namely a towing position and a retracted position,
   - an actuator (26) for moving the towing hook (6) between the towing position and the retracted position, and
   - an immobilising device, which is adapted to allow moving of the towing hook (6) between the towing position and the retracted position and which is also adapted to secure the towing hook (6).
2. The towing hook arrangement (4) according to claim 1, wherein the immobilising device is coupled between the actuator (26) and the towing hook (6).
3. The towing hook arrangement (4) according to any one of the preceding claims, wherein the immobilising device allows rotation, around a rotational axis (R), of an output shaft (29) when acted upon by the actuator (26) and locks rotation of the output shaft (29) when acted upon by the towing hook (6).
4. The towing hook arrangement (4) according to any one of the preceding claims, wherein the immobilising device comprises a gear arrangement (14, 54).
5. The towing hook arrangement (4) according to claim 4, wherein the gear arrangement (14, 54) comprises a first gear (24, 34) and a second gear (22, 32), the first gear (24, 34) being interconnected with the second gear (22, 32), wherein the actuator (26) is operatively coupled to the second gear (22, 32) and the towing hook (6) is operatively coupled to the first gear (24, 34).
6. The towing hook arrangement (4) according to claim 5, wherein the first gear (24, 34) comprises gear teeth, and wherein the second gear (22, 32) comprises gear teeth, the number of gear teeth being different between the first gear (24, 34) and the second gear (22, 32).
7. The towing hook arrangement (4) according to claim 5 or 6, wherein the gear arrangement (14) comprises a planetary gear arrangement (14), and wherein the first gear (24) is a first circular gear (24) and the second gear (22) is a second circular gear (22) positioned adjacent to the first circular gear (24) along the rotational axis (R), and wherein the gear arrangement (14) further comprises a set of planetary gears (18a-d) arranged symmetrically around the rotational axis (R) and which is positioned between the first circular gear (24) and the second circular gear (22) and in operative engagement with both the first circular (24) gear and the second circular gear (22).
8. The towing hook arrangement (4) according to claim 7, wherein the set of planetary gears (18a-d) is positioned concentrically within the first circular gear (24) and the second circular gear (22), and/or wherein the immobilising device comprises an input shaft (28) operatively coupled to the actuator (26), wherein the input shaft (28) is operatively coupled to the second circular gear (22), and/or wherein the towing hook arrangement (4) further comprises a sun gear (16), wherein the input shaft (28) is coupled to the sun gear (16) which is positioned concentrically to and in engagement with the set of planetary gears (18a-d).
9. The towing hook arrangement (4) according to claim 5 or 6, wherein the first gear (34) is a flexible gear (34) and the second gear (32) comprises a non-circular wheel (32') and an outer rigid gearing wall (32") and wherein the non-circular wheel (32') is positioned concentrically within and operatively connected to the flexible gear (34), and the flexible gear (34) is positioned concentrically between the non-circular wheel (32') and the rigid gearing wall (32"), and wherein the non-circular wheel (32'), at least when in use, is positioned concentrically within the flexible gear (34) and has at least one protrusion sized and shaped in order to impose an outer shape on the flexible gear (34) and wherein the outer shape of the flexible gear (34) is in abutment with the rigid gearing wall (32") at the at least one protrusion.
10. The towing hook arrangement (4) according to claim 9, wherein the immobilising device comprises an input shaft (28) operatively coupled to the actuator (26), wherein the input shaft (28) is operatively coupled to the second gear (32).
11. The towing hook arrangement (4) according to any one of claims 9 or 10, wherein the number of teeth of the flexible gear (34) is less than the number of teeth of the second gear (32).
12. The towing hook arrangement (4) according to any one of claims 3 to 11, wherein the immobilising device comprises an output shaft (29) and wherein the output shaft (29) is operatively coupled to the towing hook (6), and to the first gear (24, 34).
13. The towing hook arrangement (4) according to any one of the preceding claims, wherein the towing hook arrangement (4) comprises
   - a second actuator (76),
   - a releasable locking device (78) for releasably locking the towing hook (6) in its retracted position and/or in its towing position, and
   - a second immobilising device,
   wherein the second actuator (76) is adapted to operate the releasable locking device (78), and the second immobilising device is adapted to allow moving of the releasable locking device (78) between a locked state and an unlocked state, while being adapted to inhibit backlash for securing the releasable locking device (78) in the locked state.
14. A vehicle (2) being provided with a towing hook arrangement (4) according to any one of the preceding claims.
15. Use of a towing hook arrangement (4) according to any one of the claims 1 to 14 in a vehicle (2).

## Claims

1. A towing hook arrangement (4), which is adapted to be mounted on a vehicle (2) for towing or carrying an object, the towing hook arrangement (4) comprising
- a retractable towing hook (6) movable between at least two positions when mounted on a vehicle (2), namely a towing position and a retracted position,
- an actuator (26) for moving the towing hook (6) between the towing position and the retracted position, and
- an immobilising device, which is adapted to allow moving of the towing hook (6) between the towing position and the retracted position and which is also adapted to secure the towing hook (6),
wherein the immobilising device is coupled between the actuator (26) and the towing hook (6),
wherein the immobilising device allows rotation, around a rotational axis (R), of an output shaft (29) when acted upon by the actuator (26) and locks rotation of the output shaft (29) when acted upon by the towing hook (6),
wherein the immobilising device comprises a gear arrangement (14, 54),
wherein the gear arrangement (14, 54) comprises a first gear (24, 34) and a second gear (22, 32), the first gear (24, 34) being interconnected with the second gear (22, 32),
wherein the actuator (26) is operatively coupled to the second gear (22, 32) and the towing hook (6) is operatively coupled to the first gear (24, 34),
wherein the gear arrangement (14) comprises a planetary gear arrangement (14), and
wherein the first gear (24) is a first circular gear (24) and the second gear (22) is a second circular gear (22) positioned adjacent to the first circular gear (24) along the rotational axis (R), and wherein the gear arrangement (14) further comprises a set of planetary gears (18a-d) arranged symmetrically around the rotational axis (R) and which is positioned between the first circular gear (24) and the second circular gear (22) and in operative engagement with both the first circular (24) gear and the second circular gear (22),
wherein the towing hook arrangement (4) further comprises a sun gear (16), wherein the input shaft (28) is coupled to the sun gear (16) which is positioned concentrically to and in engagement with the set of planetary gears (18a-d), and
wherein the immobilising device comprises an output shaft (29) and wherein the output shaft (29) is operatively coupled to the towing hook (6), and to the first gear (24, 34),
**characterized in that**
the first gear (24, 34) comprises gear teeth, and the second gear (22, 32) comprises gear teeth, the number of gear teeth being different between the first gear (24, 34) and the second gear (22, 32).

2. The towing hook arrangement (4) according to claim 1, wherein a number of gear teeth of the planetary gears (18a-d) are always in abutment with gear teeth of the first circular gear (24) and second circular gear (22).

3. The towing hook arrangement (4) according to any one of claims 1-2, wherein the towing hook arrangement (4) comprises
- a second actuator (76),
- a releasable locking device (78) for releasably locking the towing hook (6) in its retracted position and/or in its towing position, and
- a second immobilising device,
wherein the second actuator (76) is adapted to operate the releasable locking device (78), and the second immobilising device is adapted to allow moving of the releasable locking device (78) between a locked state and an unlocked state, while being adapted to inhibit backlash for securing the releasable locking device (78) in the locked state.

4. A vehicle (2) being provided with a towing hook arrangement (4) according to any one of the preceding claims.

5. Use of a towing hook arrangement (4) according to any one of the claims 1 to 3 in a vehicle (2).
